# EUROPEAN PATENT SPECIFICATION

(11) **EP 3 203 287 B1**
(45) Date of publication and mention of the grant of the patent: **16.11.2022**
(21) Application number: 16154098.4
(22) Date of filing: 03.02.2016
(51) Int. Cl.: G02B 6/44, G02B 6/38, H01P 3/16

(54) **HYBRID PLASTIC MICROWAVE FIBERS**
HYBRIDE MIKROWELLENKUNSTSTOFFFASERN
FIBRES HYBRIDES MICRO-ONDES EN PLASTIQUE

(43) Date of publication of application: 09.08.2017
(73) Proprietor: TE Connectivity Germany GmbH, 64625 Bensheim (DE); TE Connectivity Corporation, Berwyn, PA 19312 (US); TE Connectivity Nederland B.V., 5222 AR 's Hertogenbosch (NL)
(72) Inventor: RIEZEBOS, Dirk-Jan, 6661 Elst / SP (NL); DITTMANN, Markus, 64673 Zwingenberg (DE); BROEKSTEEG, Jan M., 5346 Oss / WJ (NL); PANIS, Martinus EJ, 5275 Den Dungen / LE (NL); ROUSSTIA, Mohadig Widha, 5612 Eindhoven / DZ (NL); WANG, Julia Jialing, Mountain View, CA 94043 (US)
(74) Representative: Grünecker Patent- und Rechtsanwälte PartG mbB

(56) References cited:
- EP-A1- 0 113 024
- EP-A2- 0 928 048
- CA-A1- 2 449 596
- JP-A- H03 200 108
- US-A- 2 897 461
- US-A- 4 463 329
- US-A- 4 895 426
- US-A1- 2014 368 301
- SOLLMAN L C: "OPTICAL INSTRUMENTATION BUS", NAVY TECHNICAL DISCLOSURE BULLETIN, OFFICE OF NAVAL RESEARCH. ARLINGTON, US, vol. 10, no. 2, December 1984 (1984-12), pages 59-62, XP002016598,

## Description

### TECHNICAL FIELD OF THE INVENTION

The present invention relates to hybrid composite fibers for transmission of data and power, and more particularly, to hybrid composite fibers having a dielectric waveguide for transmission of electromagnetic waves in which the wavelength is within the millimeter wave (mm-wave) and/or the microwave range, and to hybrid power cables and hybrid connectors using the same.

### BACKGROUND OF THE INVENTION

At present, the connection of devices to IP-based networks (intranet/Internet) is done either by a wireless connection or a wired connection. For wireless connections over WLAN, communications are performed over a medium shared by multiple users and devices, which results in the shared medium becoming overcrowded if a large number of devices attempt to use the shared medium at the same time. In addition, data security over WLAN is a critical issue since WLAN-signals can be received outside user's own premises as they are transmitted over a shared air medium.

Wired based connections do not have the drawbacks associated with wireless communications since the communications are bound to a physically constrained transmission medium, i.e. a transmission cable. Conventional (electrical) wired solutions are based on RJ-45 connectors and bulky CAT5 cables. These connectors and cables need separate routing since it is not allowed to install them in the same conduit as 110V/240V grid-power cables due to safety issues. As a result, a separate plug outlet is needed at the wall of the premises and on the device to be connected. Further, a separate network cord must be provided next to the power cord.

Optical fiber solutions based on Plastic Optical Fiber (POF) or glass fibers have also been adopted for LAN communications. Fiber optic solutions based on POF commonly use step-index 1 mm thick core, which have the advantage of being easily terminated and coupled to other fibers or optical devices. A disadvantage of step index POF based solutions is that the data rate of optical fibers is limited to 200 Mbit per second due to the multimode nature of the physical channel in the fiber. Glass optical fiber based solutions employ multi or single mode optical fibers, which provide a much better physical channel for data rates much greater than 1 Gbit per second. However, these fibers have the drawback they are difficult to terminate and require a tight tolerance for coupling.

Hybrid copper/optical solutions that integrate copper wires as current-carrying components with optical fibers have also been developed. Such hybrid copper/optical solutions simplify installation as compared to the installation of separate electrical and optical cables. However, they still present the drawbacks associated with optical fibers mentioned above.

Dielectric waveguides for transmission of electromagnetic waves in the range of 100 GHz - 200 GHz have been proposed. At this frequency range, dielectric waveguides are sensitive to external influences due to coupling between evanescent waves from the waveguide and external agents, such as a finger or hand that touches the dielectric waveguide, causing signal degradation. Patent application publication US 2014/0368301 A1 describes a dielectric waveguide having a dielectric cladding and a conductive shield layer, such as a metal foil, that surrounds a portion of the dielectric cladding.

Thus, there is still a need for solutions that allow an efficient transmission of data signals at the frequency band within 30 GHz to 300 GHz, namely, at 60 GHz, and power over long distances (typically 10 meters to 100 meters) at a lower cost than copper or hybrid optical solutions, and which are easy to install.

### SUMMARY OF THE INVENTION

The present invention has been made in view of the shortcomings and disadvantages of the prior art, and an object thereof is to provide an hybrid composite fiber for transmission of data and power that are easy to install and that provide efficient transmission of both data and power over long distances and at a lower cost than existing copper and optical hybrid solutions.

This object is solved by the subject matter of the appended independent claim 1. Advantageous embodiments of the present invention are the subject matter of the appended dependent claims.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form, individually or in different combinations, solutions according to the present invention. The embodiments described in the following thus can be considered either alone or in an arbitrary combination thereof.

### BRIEF DESCRIPTION OF THE FIGURES

Further features and advantages will become apparent from the following more particular description of the various embodiments of the invention, as illustrated in the accompanying drawings, in which like references refer to like elements, and wherein:
**Fig. 1** is a schematic view of a hybrid composite fiber according to an embodiment of the present invention;
**Fig. 2** is a schematic view of a hybrid composite fiber according to another embodiment of the present invention;
**Fig. 3** is a schematic view of a hybrid power cable according to an example not covered by the present invention;
**Fig. 4** is a schematic view of a hybrid power plug according to an example not covered by the present invention;
**Fig. 5** is a schematic view of a hybrid power socket according to an example not covered by the present invention;
**Fig. 6** is a schematic view of a cross-section of a composite dielectric waveguide fiber according to an example not covered by the present invention; and
**Fig. 7** is a schematic view of a cross-section of a composite dielectric waveguide fiber according to an example not covered by the present invention.

### DETAILED DESCRIPTION OF THE INVENTION

The present invention will now be more fully described with reference to the Figures, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art.

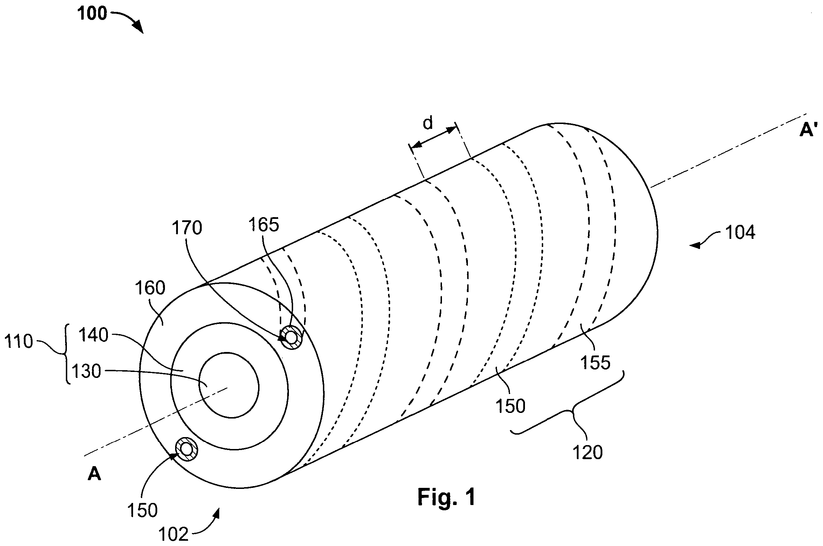

A first configuration of a hybrid composite fiber 100 for transmission of data and power will now be described with reference to Fig. 1. The hybrid composite fiber 100, which in the following will be referred to as hybrid fiber 100 for simplicity, comprises a dielectric waveguide 110 for transmitting data signals from one end 102 of the hybrid fiber 100 to another end 104 of the hybrid fiber 100 along a transmission axis AA'. In addition, the hybrid fiber 100 includes an electrical conducting element 120 disposed around the dielectric waveguide 110 and extending between the opposed ends 102, 104 of the fiber 100, as it will be described later.

The dielectric waveguide 110 is designed with dielectric properties, such as a dielectric constant εᵣ and a dielectric loss tangent, suitable for the transmission of electromagnetic waves with a wavelength above the wavelength range of visible light (optical spectrum), such as electromagnetic radiation in the millimeter wave (mm-wave) frequency band, which ranges from 30 GHz to 300 GHz, and/or at lower GHz frequencies which includes communications at 2.4 GHz and 5 GHz. The transmission in the mm-wave frequency band finds applications in a variety of fields, such as, Gigabit Ethernet and data communications with transceivers operating at 60 GHz.

In the configuration illustrated in Fig. 1, the dielectric waveguide 110 includes a core member 130 that includes a single layer of dielectric material such as a PE (polyethylene) material, and/or a foamed polymer material. The core member 130 may be surrounded by a cladding 140 that is in direct contact with the core member 130. The cladding 140 may be provided as one or more layers of dielectric materials having a lower dielectric constant than the materials forming the core member 130 so as to reflect the electromagnetic wave propagating inside the core member 130 at the cladding-core boundary. In the configuration shown in Fig. 1, the dielectric waveguide 110 has a single core 130 and a single cladding layer 140 with cross-sections that are substantially circular. However, other configurations of the dielectric waveguide 110 can be envisaged. Namely, the core member 130 may have a multilayered structure comprising a plurality of superimposed layers of different dielectric materials with dielectric constant values that decrease outwards with increasing distance from the core center in the radial direction.

Moreover, the core member 130 and the cladding 140 may have cross-sections with different shapes, such as a rectangular shape, oblong shape, etc.

The diameter of the core member 130 and the thickness of cladding layer(s) 140 will depend on the particular application. For instance, for transmitting data signals at 60 GHz, a core member 130 with a cross-sectional diameter of 2 - 3 mm may be used.

The electrical conducting member 120 may be coupled to respective electrical potentials provided at each end of the fiber 100 (not shown) for carrying an electrical current between the fiber opposed ends 102, 104, thereby providing a current-carrying medium for the transport of power and/or electrical signals over the entire length of the hybrid fiber 100 between the opposed ends 102 and 104. In order to improve the confinement of the transmitted electromagnetic wave to the fiber core 130 while maintaining low attenuation, the electrical conducting element 120 is disposed around the dielectric waveguide 110 and extends between the opposed ends 102, 104 so as to cover the dielectric waveguide almost entirely. The electrical conducting element 120 may be then designed to simultaneously function as an electromagnetic shielding for avoiding the coupling of evanescent waves of the propagating electromagnetic wave with external influences, thereby keeping the propagating wave confined within the hybrid fiber 100.

In the configuration shown in Fig. 1, the electrical conducting element 120 includes two electrical wires 150 and 155, each electrical wire being adapted to carry an electrical current between the two ends 102, 104 of the fiber 100. However, the number of electrical wires of the electrical conducting element 120 may vary, and a single wire or more than two electrical wires may be provided for the transport of power and/or electrical signals to a single or more than two electric inputs/outputs at the other end of the hybrid fiber 100, if required.

In order to shield the propagating electromagnetic wave, the electrical wires 150 and 155 may be wrapped around the dielectric waveguide 110 from one end 102 to the opposed end 104 of the hybrid fiber 100. Preferably, the electrical wires 150 and 155 may be rolled around the cladding 140 in a helical manner along the transmission axis AA', leaving a given spacing d between the wires 150, 155 such that these are sufficiently close for providing a required electromagnetic shield effect. The value of the spacing d will depend on the wavelength of the signal to be transmitted, the structure of the dielectric waveguide 110 as well as the required strength of shielding and may be calculated for a specific application based on these parameters, for instance, using simulation methods known in the field. However, for most applications, a value of the spacing d smaller than the wavelength of the propagating wave should provide a sufficient shield effect. As shown in Fig. 1, the electrical wires 150 and 155 are preferably embedded in an outer layer 160 involving the dielectric waveguide 110, such as in a buffer layer provided over the cladding 140, to fixate the electrical wires 150, 155 in place. In this way, both the current-carrying element 120 and the dielectric waveguide 110 are integrated in a same cable, which facilitates installation. The electrical wires 150, 155 may be a conventional type of electrical wire suitable for the transmission of the intended power and/or electric signals. For instance, electrical wires including a metallic core 165 and surrounded by a protective, insulating sheath 170 may be used as illustrated in Fig. 1.

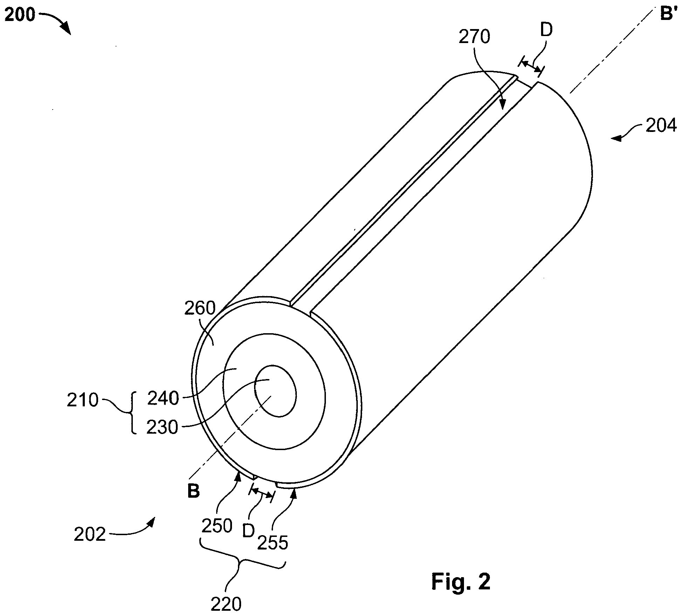

Fig. 2 shows a further configuration of a hybrid composite fiber 200 for transmission of data and power according to the principles of the present invention. The hybrid composite fiber 200 comprises a dielectric waveguide 210, which may include a core member 230 and a cladding 240 similar to the core member 130 and cladding 140 described above with reference to Fig. 1, respectively. However, the hybrid fiber 200 includes an electrical conducting element 220 with a different configuration from the electrical conducting element 120. As shown in Fig. 2, the electrical conducting element 220 is disposed around the dielectric waveguide 210 and extends along the fiber transmission axis BB' between the fiber ends 202, 204, but now comprises a plurality of conductive parts 250 and 255 that extend side-by-side along the entire length of the dielectric waveguide 210 and almost covering the dielectric waveguide 210 entirely. The conducting parts 250 and 255 are preferably provided as curved plates or sheets made from a good electrical conducting material, such as a metal (Cu or Ag), or a conductive composite material as it will be described later, and have a thickness suitable for sustaining the electrical current and/or signal to flow between the opposed ends of the fiber 200. Each conducting part 250, 255 can be coupled to a respective electric potential at each end of the hybrid fiber 200, such as a power input/output (not shown) so as to provide separate transmission lines for transferring power and/or electrical signals from one end to the other end of the hybrid fiber 200. In this case, each of the conducting parts 250, 255 of the electrical conducting element 220 may be electrically insulated from each other by disposing the conducting parts 250, 255 side-by-side along the length of the fiber 200 and separated by a gap 270 that electrically isolates each of the conducting parts 250, 255 from each other. Similarly to the spacing d between the electrical wires 150, 155 of the electrical conducting element 120 described with reference to Fig. 1, the width D of the gap 270 depends on the wavelength of the electromagnetic wave propagating inside the waveguide 210 and should be sufficiently small so as to prevent the propagating wave from coupling with an external agent and coupling into higher-order modes.

In addition, the dielectric waveguide 210 may include a buffer layer 260 between the cladding 240 and the electrical conductive element 220 for providing additional support and/or isolation. The electrical conducting element 220 may then be directly deposited on the dielectric waveguide 210 and/or buffer layer 260 by techniques known in the field such as evaporation or sputtering techniques. The shape of the conducting parts 250, 255 essentially follows the shape of the external cross-section of the dielectric waveguide 210 and/or buffer layer 260 so as to provide a good electromagnetic shielding of the hybrid fiber 200. In the illustrated example, the conducting parts 250, 255 are curved plates 250, 255 with a semi-tubular form that substantially follows the circular cross-section of the dielectric waveguide 210 and buffer layer 260 and are disposed around the transmission axis BB' in a concentric manner. The thickness of the conducting parts 250, 255 depends on the particular application, but should be sufficiently thick so as to be capable of carrying the intended power and be larger than the skin depth of the electrical conducting material at the operation frequency so as to ensure an effective electromagnetic shielding.

While the configuration illustrated in Fig. 2 includes only two conductive parts 250, 255, the electrical conducting element 220 may have a larger number of conductive parts extending over the entire length of the hybrid fiber 200 but with a smaller width so that they can be disposed side-by-side around perimeter of the waveguide 210 and separated by the gap 270. Each of the plurality of conductive parts may be coupled to a different electric potential at each end 202, 204 of the hybrid fiber 200 so as to provide separate transmission lines for carrying power and/or electrical signals between them fiber ends 202, 204. Alternatively, some conductive parts may be electrically coupled to a same electrical potential such as a common ground.

The electrical conducting elements 120 and 220 preferably extend between the opposed ends of the hybrid fiber 100 and 200, respectively, so as to provide an efficient electromagnetic shielding over the entire length of the hybrid fiber as well as to facilitate the termination and coupling of the fiber as both electromagnetic and electrical couplings are provided at the end sides of the fiber.

In an alternative configuration (not shown), the electrical conducting element may be provided as one or more conducting tubular elements arranged concentrically about the dielectric waveguide. Each of the conducting tubular elements may be coupled between respective electric potentials for carrying an electrical power/signal between the ends of the fiber. In the case of more than one conducting tubular element being provided, these may be separated from each other by an intermediate insulating layer.

By applying a configuration of electrical conducting elements as described above around a dielectric fiber, it is possible to not only provide a shield capable of keeping an RF mm-wave signal (e.g. 60 GHz) inside the fiber 100, enabling low insertion loss over long distances, but at the same time to also transport a supply current from one side of the fiber to the opposed side by applying, for example, a 24V or 48V electric potential at the electrical conducting element 120. A common ground may be used, for e.g. the common ground provided by the chassis of a car or a machine. In this case, only one conductive element is needed.

Thus, a "hybrid PMF" (Plastic Microwave (or Millimeter wave) Fiber) solution is provided, which can be used, for example, not only to connect any Gigabit Ethernet host to a Gigabit Ethernet slave, but also to supply power to a slave side through the very same cable. The hybrid PMF concept can also be advantageously applied in combination with any microwave transceiver at 60 GHz.

The hybrid composite fiber described above offers several advantages over existing optical hybrid solutions. First, the lower cost in comparison with copper or optical hybrid solutions. Moreover, the hybrid composite fiber is easy to install and is provided as a single cable assembly that can be plugged into a single receptacle. Moreover, with the use of the hybrid composite fiber there is no need to provide a power supply at the slave side. This is particularly advantageous in case where power is simply not available at the slave side or not owned by the installer (which could mean extra service or installation cost). It also makes possible to provide contactless connection at any location within a device, since the coupler will be fully passive and therefore tiny. The above designs can be implemented in any existing Ethernet solutions, with a range of 1-100 meter typically, that also require local power such as automotive application, industrial Ethernet, consumer and/or offices buildings, and networks solutions (e.g. FTT Antenna/FTT Home).

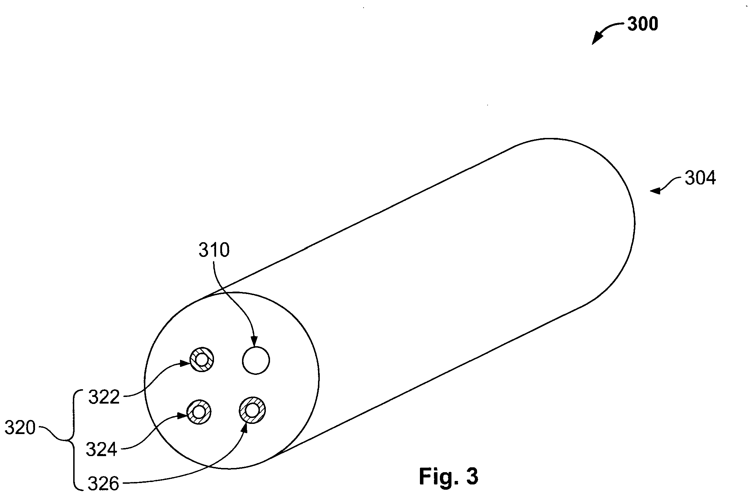

With reference to Fig. 3, we shall now describe a hybrid power cable 300 according to an example not covered by the present invention, which integrates the transmission of data over a dielectric waveguide with power transmission over separate electric transmission lines in a same cable.

The hybrid cable 300 comprises a dielectric waveguide 310 for transmitting data between the opposed ends 302, 304 of the hybrid power cable 300 via an electromagnetic wave having a wavelength in the millimeter wave range or microwave range. Any of the dielectric waveguides 110 and 210 described above may be used for the data transmission line of the hybrid power cable 300. The dielectric waveguide 310 is used for transporting data by means of modulated electromagnetic waves, i.e. a plastic mm-wave fiber (PMF) for electromagnetic waves in the frequency range from 30 GHz to 300 GHz. These guided electromagnetic waves are immune to electromagnetic radiation emitted by power cords, devices or any other conventional wireless communication, and also the guided electromagnetic waves in this PMF waveguide does not create any emission issues on the power lines. For the transmission of power, the hybrid power cable 300 comprises one or more electrical conducting elements 320 that extend over the cable length for transporting electrical current from one end 302 to the other end 304 of the hybrid power cable 300. The one or more electrical conducting elements 320 are preferably conventional electrical wires 322, 324, and 326 that will provide electrical coupling to at least one of protective earth, neutral and phase, respectively. In contrast to the configurations described above with reference to Figs. 1 and 2, the current-carrying elements 320 are not disposed around the dielectric waveguide 310 but run side-by-side along the hybrid cable 300.

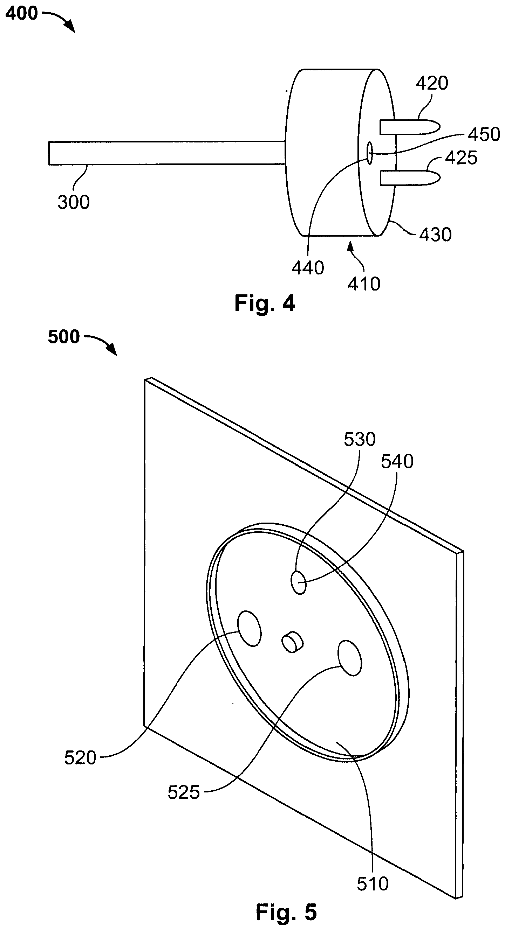

A hybrid power plug 400 for terminating a hybrid power cable, such as the hybrid power cable 300, will now be described with reference to Fig. 4.

The hybrid power plug 400 includes a plug body 410 having one or more metallic male connectors 420, 425 arranged on a surface 430 of the plug body 410 for electrically coupling to one or more of the electrical conducting elements 320 of the hybrid power cable 300, respectively. While the plug 400 of the illustrated configuration includes only two male connectors 420, 425, the number of male connectors may vary depending on the number of electrical conducting elements of the respective hybrid power cable to be terminated.

In addition, next to the male connectors 420, 425, the hybrid power plug 400 includes a port 440 arranged on the same surface 430 of the plug body 410 for accommodating an end face 450 of the dielectric waveguide 310 of the hybrid power cable 300. The port 440 may be implemented as a channel (not shown) inside the plug body 410 on which an extremity of the dielectric waveguide 310 to be terminated is arranged. The channel may be opened at the surface 430 such that the end face 450 of the dielectric waveguide 310 can be directly coupled to an incoming dielectric waveguide. In an alternative configuration, the channel may be closed at the plug body surface 430 by a coupling window having a transparent area that covers the end face 450 of the dielectric waveguide 310 arranged in the channel.

The male connectors 420, 425 and the port 440 may be disposed on the surface 430 such as to match with respective coupling elements provided on a hybrid power socket 500 for plugging the hybrid power plug 400. An exemplary configuration of the hybrid power socket 500 is shown in Fig. 5. The hybrid power socket 500 comprises one or more female connectors 520, 525 arranged on a surface 510 of the socket 500 that faces the hybrid power plug 400 for receiving the respective male connectors 420, 425. In addition, the hybrid power socket 500 also includes a port 530 for accommodating an end face 540 of an incoming dielectric waveguide (not shown), such as a waveguide installed inside a wall on which the hybrid power socket 500 will be mounted. The port 530 is arranged on the surface 510 of the hybrid power socket 500 for establishing electromagnetic coupling with the end face of the dielectric fiber 450 coupled to the hybrid power plug 400. The port 530 may be implemented with an opening at the surface 510 on which the end face 540 of the incoming dielectric waveguide is arranged. In an alternative configuration, the port 530 may comprise a closed surface with a transparent area that covers the end-face 540 of the dielectric waveguide mounted on the hybrid power socket 500. In the hybrid power plug 400 illustrated in Fig. 4, the male connectors 420, 425 and the port 440 are disposed at some distance from the center of the plug body surface 430. However, an hybrid power plug with other arrangement of the male electrical connectors and the port for the dielectric waveguide may be envisaged. For instance, in an advantageous configuration, the port 440 for the dielectric waveguide might be provided at the center of the hybrid power plug 400 instead, more specifically, at the midpoint between the male connectors 420, 425. Similarly, the hybrid power socket 500 may be modified such that the port for the dielectric waveguide is arranged at the midpoint between the female electrical connectors 520, 525. Such modified configurations have the advantage that the hybrid power plug may be inserted in the hybrid power socket with a rotation of 180° while the position of the port relative to the power socket remains the same.

Thus, by integrating a PMF fiber as a data transmission line into the power cord, next to the wires used for coupling to neutral, phase, and/or protective earth, the hybrid power cable 300 provides an integrated solution that facilitates installation of both power transmission and data transmission lines without the need for separating network and power cords. Since the PMF is nonconductive to electric currents, it can be safely integrated into high voltage cables. This eliminates the need for separating data and power connector and cables. The hybrid power cable 300 can then be advantageously used to transport Ethernet data packets to connect any grid powered device with a single cable and connector. It also enables Internet of Things (loT) without the problems associated with overcrowded WLAN due to shared medium (e.g. air) and without the need for separating power and data infrastructures for plugs, sockets and cords.

Moreover, the respective hybrid plug 400 and hybrid socket 500 allow easily coupling between the hybrid power cable 300 with incoming/out-coming power transmission and the data transmission lines using a single plug and socket assembly.

In addition, the hybrid power socket 500 makes possible to retrofit existing cabling infrastructures with plastic mm-wave fibers. For instance, the electrical infrastructure of a building can be updated to be connectable to household equipment (e.g. a machine, a TV-set, etc.) that use a power cord with integrated PMF by simply adding a PMF in the PVC tubes and junction boxes of the existing infrastructure and by replacing the conventional power out-let with the hybrid power socket 500. The added PMF can then be easily mounted on the hybrid socket port 530. Since the tubing in building infrastructures typically can hold more wires than the standard needs, plastic mm-wave fibers can be easily accommodated in the existing tubing. In addition, any electrician can update the electrical infrastructure to PMF as no specific skills are needed (like with fiber-optics). In case that data enters the building by means of coaxial cable or fiber, these data may be transferred into PMF by means known in the field.

As discussed earlier, a millimeter electromagnetic wave can be confined in a waveguide while maintaining low attenuation and while utilizing processes and material properties (e.g. elasticity) associated with polymers.

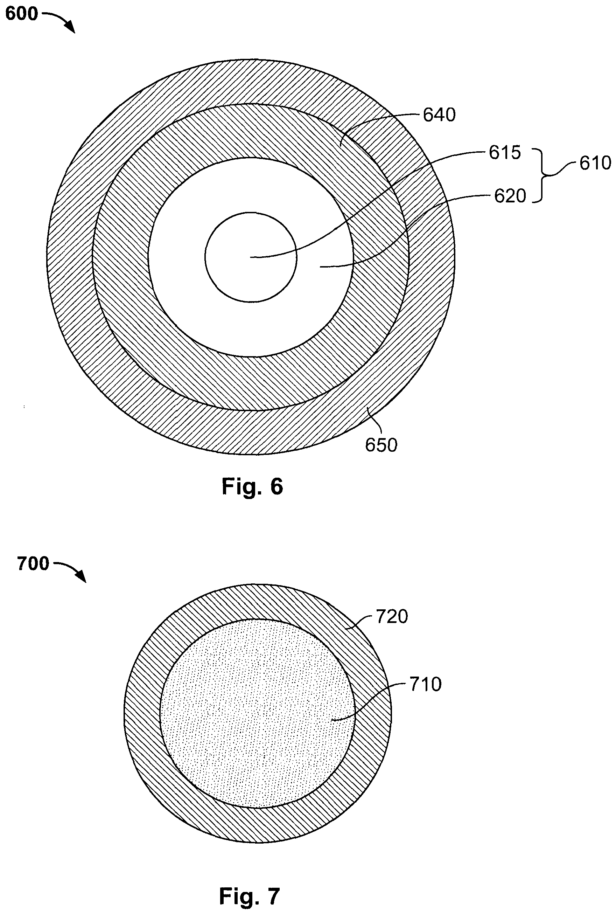

Fig. 6 shows a configuration for a composite dielectric waveguide fiber 600 according to an example not covered by the present invention. The composite waveguide fiber 600 comprises a core member 610 that includes one or more dielectric layers of dielectric material suitable for the transmission of millimeter electromagnetic waves (mm-waves). In the illustrated example, the core member 610 has a layered structure that includes two dielectric layers 615 and 620. However, the number of dielectric layers forming the core member 610 may vary, and the core member 610 may include a single dielectric layer (see Fig. 7) or more than two dielectric layers. The core member 610 and the additional layers (not shown) may be made of dielectric materials with a relative permittivity that decreases from the center of the core member 610 to the more outward layers. The more outward layers may be foamed so as to provide a lighter waveguide 600, to reduce attenuation of the waveguide 600, and to improve the flexibility and confinement as compared to waveguides made of dense dielectric materials. In an alternative configuration, one or more of the dielectric layers 615, 620 may be hollow layers.

The composite waveguide fiber 600 further includes a shielding layer 640 provided at a distance from the center of the core member 610 for confining the mm-wave within the composite waveguide fiber 600. Preferably, the shielding layer 640 comprises a conductive composite material. The conductive composite material may consist of a polymer matrix with metal particles. The conductivity of the conductive composite may range from 0.01%-1% of International Annealed Copper Standard (IACS), while maintaining processability, such as extrudability, of thermoplastics, and the flexibility of the material. The shielding layer 640 may be disposed directly onto the core member 610. In alternative configurations, the dielectric waveguide 600 may include multiple additional layers in addition to the core member, such as cladding layers (not shown). Both the core member 610 and the additional layers are then enclosed by the shielding layer 640.

In the illustrated example, the shielding layer 640 has a cross-section with a substantially circular shape which follows the shape of the inner dielectric layers 615, 620 of the core member 610. However, the core member 610 and/or the shielding layer 640 may have cross-sections of different shapes, such as rectangular or otherwise. The dielectric waveguide 610 may also include a protective outer sheath 650, such as a jacket layer.

Fig. 7 shows a configuration of a composite dielectric waveguide 700 comprising a core member 710 that includes a single dielectric layer 710 for transporting the mm-wave signal and a shielding layer 720 for confining the propagating mm-wave within the core member 710. The single dielectric layer 710 may be made of a foam of a polymer material, which provides a better transmission medium for the propagation of mm-waves as compared to conventional, dense polymer materials. The shielding layer 720 may be made from a good electrical conductor, such as metal, but is preferably formed from a conductive composite material, similarly to the shielding layer 640.

The above composite dielectric waveguides may be fabricated by techniques known in the field. In particular, the dielectric waveguides can be co-extruded or tandem-extruded with the dielectric and/or the jacket layer to form a seamless multi-layered structure or applied in a thin film/tape form to the dielectric layer(s).

The above design for a composite dielectric waveguide fiber provides a mm-wave waveguide with a high degree of millimeter wave confinement, resulting in a 'touch insensitive fiber' that can be advantageously used for transmitting data at 1-100Gb/s over distances ranging from 4 to 40 m. Moreover, since the composite dielectric waveguide fibers 600 or 700 can be produced by polymer extrusions processes and the amount of metal used in the shielding layer is reduced in comparison to a full shielding layer made of metal, they have a low fabrication cost. In addition, the use of conductive composite material as well as of foamed dielectric layers allows achieving a dielectric waveguide design with a light weight and improved flexibility.

In addition, any of the hybrid fiber configurations described above may be implemented in place of optical transmission lines of couplers used in interconnection systems based on both contactless power and contactless data. For instance, a hybrid PMF solution can be made fully contactless by implementing a hybrid dielectric fiber as described above into a contactless power coupler. In this case, the coupler may only include active elements for the wireless power transfer and it is not necessary to provide an RF transceiver. In this case, the electrical conducting elements of the hybrid fiber may be simply connected to power inputs/outputs of the couplers. Without the power link, it is also possible to make passive in-line connectors which can rotate/tilt/move by having a waveguide element coupled to each PMF end. This uses a single full duplex PMF fiber using left and right handed polarized waves being generated by patch antenna at the transmitter/receiver side.

### LIST OF REFERENCE NUMERALS

- 100: hybrid composite fiber
- 102, 104: opposed ends of fiber
- 110: dielectric waveguide
- 120: electrical conducting element
- 130: core member
- 140: cladding layer
- AA': transmission axis
- 150, 155: electrical wires
- 160: outer layer
- 165, 170: metallic core and insulating sheath of electrical wires
- d: spacing between electrical wires
- 200: hybrid composite fiber
- 202, 204: opposed ends of fiber
- 210: dielectric waveguide
- 220: electrical conducting element
- 230: core member
- 240: cladding
- BB': transmission axis
- 250, 255: conducting parts
- 260: outer layers
- 270, D: gap between conducting parts
- 300: hybrid power cable
- 310: dielectric waveguide
- 320: electrical conducting element
- 322, 324, 326: protective earth, neutral and phase
- 400: hybrid power plug
- 410: plug body
- 420, 425: male connectors
- 430: surface of plug body
- 440: port for end face of PMF
- 450: end face of PMF
- 500: hybrid power socket
- 510: surface
- 520, 525: female connectors
- 530: port for end face of PMF
- 540: end face of PMF
- 600: composite millimeter waveguide
- 610: core member
- 615, 620: dielectric layers
- 640: shielding layer
- 650: outer sheath
- 700: composite millimeter waveguide
- 710: core member with single layer
- 720: shielding layer

## Claims

1. A hybrid composite fiber for transmission of data and power, comprising:
a dielectric waveguide (110; 210) adapted to transmit data from an end (102; 202) of the fiber to another end (104; 204) of the fiber via electromagnetic radiation with a wavelength above the optical spectrum; and
an electrical conducting element (120; 220) disposed around the dielectric waveguide (110; 210) between said ends of the fiber to electromagnetically shield the electromagnetic wave propagating inside the dielectric waveguide (110; 210);
wherein the electrical conducting element (120; 220) is adapted to be coupled to electrical potentials at each end of the fiber for carrying an electrical current between said ends of the fiber;
**characterized in that**
the electrical conducting element (120) includes one or more electrical wires (150, 155) adapted to carry an electrical current between said ends (102, 104) of the fiber that are wrapped around the dielectric waveguide (110) from one end (102) to the opposed end (104) of the fiber at a predetermined spacing (d) so as to partially cover the dielectric waveguide (110); or
the electrical conducting element (220) includes a plurality of conductive parts (250; 255) adapted to carry an electrical current between said ends (202, 204) of the fiber and which are disposed side-by-side and at a predetermined spacing (D) around a perimeter of the dielectric waveguide (210) so as to partially cover the dielectric waveguide (210), the predetermined spacing (D) between each of the plurality of conductive parts (250; 255) forming a gap (270) that electrically isolates the plurality of conductive parts (250; 255) from each other;
wherein the predetermined spacing (D) is selected based on a wavelength of electromagnetic radiation to be transmitted through the dielectric waveguide (110; 210) so as to prevent electromagnetic coupling of the transmitted electromagnetic radiation with external agents.

2. The hybrid composite fiber of claim 1, wherein
the dielectric waveguide (110; 210) comprises a core member (130; 230) that includes a dielectric layer made of a polymer foam.

3. The hybrid composite fiber of claim 1 or claim 2, wherein
the electrical conducting element (120; 220) is made of a conductive composite material.

4. The hybrid composite fiber of any of claims 1 to 3, wherein the dielectric waveguide (110; 210) comprises:
a core member (130; 230) made of a dielectric material having dielectric properties adapted to transport electromagnetic waves with a wavelength in the millimeter wave range and/or in the microwave range; and
a cladding (140; 240) surrounding the core member (130; 230), wherein the cladding (140; 240) has a dielectric constant value that is lower than the dielectric constant of the core member (130; 230).

## Patentansprüche

1. Hybride Verbundfaser für Übertragung von Daten und Strom, die umfasst:
einen dielektrischen Wellenleiter (110; 210), der zum Übertragen von Daten von einem Ende (102; 202) der Faser zu einem anderen Ende (104; 204) der Faser mittels elektromagnetischer Strahlung mit einer Wellenlänge oberhalb des optischen Spektrums eingerichtet ist; sowie
ein elektrisch leitendes Element (120; 220), das um den dielektrischen Wellenleiter (110; 210) herum zwischen den Enden der Faser angeordnet ist, um die sich innerhalb des dielektrischen Wellenleiters (110; 210) ausbreitende elektromagnetische Welle elektromagnetisch abzuschirmen;
wobei das elektrisch leitende Element (120; 220) so eingerichtet ist, dass es mit elektrischen Potentialen an jedem Ende der Faser gekoppelt wird, um einen elektrischen Strom zwischen den Enden der Faser zu leiten;
**dadurch gekennzeichnet, dass**
das elektrisch leitende Element (120) einen oder mehrere Stromdraht/drähte (150, 155) enthält, die so eingerichtet sind, dass sie einen elektrischen Strom zwischen den Enden (102, 104) der Faser leiten, die von einem Ende (102) zu dem gegenüberliegenden Ende (104) der Faser in einem vorgegebenen Abstand um den dielektrischen Wellenleiter (110) herum gewickelt sind und den dielektrischen Wellenleiter (110) teilweise abdecken; oder
das elektrisch leitende Element (220) eine Vielzahl leitender Teile (250; 255) umfasst, die zum Leiten eines elektrischen Stroms zwischen den Enden (202, 204) der Faser eingerichtet und nebeneinander in einem vorgegebenen Abstand (D) um einen Umfang des dielektrischen-Wellenleiters (210) herum so angeordnet sind, dass sie den dielektrischen-Wellenleiter (210) teilweise abdecken, wobei durch den vorgegebenen Abstand (D) zwischen jedem der Vielzahl leitender Teile (250; 255) ein Zwischenraum gebildet wird, der die Vielzahl leitender Teile (250; 255) elektrisch voneinander isoliert;
wobei der vorgegebene Abstand (D) auf Basis einer Wellenlänge elektromagnetischer Strahlung, die über den dielektrischen Wellenleiter (110; 210) übertragen werden soll, so ausgewählt wird, dass elektromagnetische Kopplung der übertragenen elektromagnetischen Strahlung mit externen Einrichtungen verhindert wird.

2. Hybride Verbundfaser nach Anspruch 1, wobei
der dielektrische Wellenleiter (110; 210) ein Kernelement (130; 230) umfasst, das eine aus einem Polymerschaum bestehende dielektrische Schicht enthält.

3. Hybride Verbundfaser nach Anspruch 1 oder Anspruch 2, wobei
das elektrisch leitende Element (120; 220) aus einem leitenden Verbundmaterial besteht.

4. Hybride Verbundfaser nach einem der Ansprüche 1 bis 3, wobei der dielektrische Wellenleiter (110; 210) umfasst:
ein Kernelement (130; 230), das aus einem dielektrischen Material besteht, das dielektrische Eigenschaften hat, die zum Transportieren elektromagnetischer Wellen mit einer Wellenlänge in dem Millimeterwellen-Bereich und/oder in dem Mikrowellen-Bereich eingerichtet sind; sowie
einen Mantel (140; 240), der das Kernelement (130; 230) umgibt, wobei der Mantel (140; 240) eine Dielektrizitätskonstante hat, die niedriger ist als die Dielektrizitätskonstante des Kernelementes (130; 230).

## Revendications

1. Fibre composite hybride destinée à la transmission de données et de puissance, comprenant :
un guide d'onde diélectrique (110 ; 210) conçu pour transmettre des données depuis une extrémité (102 ; 202) de la fibre à une autre extrémité (104 ; 204) de la fibre par l'intermédiaire de rayonnement électromagnétique présentant une longueur d'onde au-dessus du spectre optique, et
un élément de conduction électrique (120 ; 220) disposé autour du guide d'onde diélectrique (110 ; 210) entre lesdites extrémités de la fibre dans le but de protéger électromagnétiquement l'onde électromagnétique se propageant à l'intérieur du guide d'onde diélectrique (110 ; 210),
dans laquelle l'élément de conduction électrique (120 ; 220) est conçu pour être couplé à des potentiels électriques à chaque extrémité de la fibre afin de transporter un courant électrique entre lesdites extrémités de la fibre,
**caractérisé en ce que** :
l'élément de conduction électrique (120) inclut un ou plusieurs fils électriques (150, 155) conçus pour transporter un courant électrique entre lesdites extrémités (102, 104) de la fibre, lesquels sont enroulés autour du guide d'onde diélectrique (110) depuis une première extrémité (102) jusqu'à l'extrémité opposée (104) de la fibre avec un espacement (d) prédéterminé de sorte à recouvrir partiellement le guide d'onde diélectrique (110), ou bien
l'élément de conduction électrique (220) inclut une pluralité de composants conducteurs (250 ; 255) conçus pour transporter un courant électrique entre lesdites extrémités (202, 204) de la fibre et qui sont disposés côte à côte avec un espacement (D) prédéterminé autour du périmètre du guide d'onde diélectrique (210) de sorte à recouvrir partiellement le guide d'onde diélectrique (210), l'espacement (D) prédéterminé entre chacun de la pluralité de composants conducteurs (250 ; 255) formant un espace (270) qui isole électriquement la pluralité de composants conducteurs (250 ; 255) les uns des autres,
dans laquelle l'espacement (D) prédéterminé est sélectionné sur la base de la longueur d'onde du rayonnement électromagnétique à transmettre au travers du guide d'onde diélectrique (110 ; 210) de sorte à empêcher tout couplage électromagnétique du rayonnement électromagnétique transmis avec des agents externes.

2. Fibre composite hybride selon la revendication 1, dans laquelle :
le guide d'onde diélectrique (110 ; 210) comprend un élément formant âme (130 ; 230) qui inclut une couche diélectrique constituée d'une mousse polymère.

3. Fibre composite hybride selon la revendication 1 ou la revendication 2, dans laquelle :
l'élément de conduction électrique (120 ; 220) est constitué d'un matériau composite conducteur.

4. Fibre composite hybride selon l'une quelconque des revendications 1 à 3, dans laquelle le guide d'onde diélectrique (110 ; 210) comprend :
un élément formant âme (130 ; 230) constitué d'un matériau diélectrique présentant des propriétés diélectriques adaptées au transport d'ondes électromagnétiques de longueurs d'onde situées dans la plage des ondes millimétriques et/ou dans la plage des ondes micrométriques, et
une gaine (140 ; 240) entourant l'élément formant âme (130 ; 230), la gaine (140 ; 240) présentant une valeur de constante diélectrique qui est inférieure à la constante diélectrique de l'élément formant âme (130 ; 230).
